# FASCICULE DE BREVET EUROPEEN

(11) **EP 0 926 781 B1**
(45) Date de publication et mention de la délivrance du brevet: **26.04.2006**
(21) Numéro de dépôt: 98403293.8
(22) Date de dépôt: 23.12.1998
(51) Int. Cl.: H01R 25/16, H01R 4/62

(54) **Barre pour canalisation de distribution électrique**
Stromschiene zur elektrischen Verteilung
Busbar for electrical distribution

(30) Priorité: 24.12.1997 FR 9716822
(43) Date de publication de la demande: 30.06.1999
(73) Titulaire: SCHNEIDER ELECTRIC INDUSTRIES SAS, 92500 Rueil-Malmaison (FR)
(72) Inventeur: Becker, Franck, 21110 Genlis (FR); Thierry, Jean-Pierre, 21560 Arc-sur-Tille (FR); Jego, Gérard, 21470 Brazey en Plaine (FR)

(56) Documents cités:
- DE-A- 2 731 850
- FR-A- 2 484 724

## Description

La présente invention concerne une barre pour canalisation de distribution électrique, cette barre comprenant d'une part un profilé plat en aluminium qui s'étend selon une direction longitudinale et d'autre part, disposées à intervalles réguliers sur la longueur du profilé et/ou à ses extrémités, des pièces de contact en cuivre mises en contact électrique intime avec le profilé, les pièces de contact étant des cavaliers en forme de U dont les ailes enveloppent le bord de la barre pour assurer le passage du courant électrique entre celle-ci et des organes de dérivation ou d'éclissage.

Une barre de ce type est décrite dans le brevet FR- 2 484 724. Les cavaliers en cuivre ainsi rapportés sur la barre en aluminium permettent d'obtenir une bonne prise de contact des organes de dérivation du d'éclissage avec le profilé en aluminium ; en effet, si la barre en aluminium assure sur sa longueur une conduction satisfaisante du courant pour un moindre coût, il n'en reste pas moins qu'en l'absence des cavaliers elle n'offre pas une qualité suffisante de conduction aux endroits prévus pour alimenter des câbles ou barres de dérivation ou pour assurer la continuité avec une autre barre la prolongeant.

Il s'avère qu'une telle barre requiert pour être exploitée de manière fiable une benne qualité d'assemblage des cavaliers au profilé et une bonne prise de contact des cavaliers avec les organes de dérivation ou d'éclissage.

L'invention a pour but d'améliorer la qualité des barres ainsi fabriquées par des dispositions très simples concemant les cavaliers.

Selon l'invention, les surfaces internes des ailes des cavaliers présentent des aires respectives argentées ; l'aire argentée de !a surface interne d'une aile sert à l'apport du métal qui assure la soudure du cavalier au profilé.

L'aire argentée de la surface interne de l'aile s'étend par exemple selon une bande sensiblement sur la largeur de l'aile transversalement à la direction longitudinale de la barre, la bande interne argentée étant située près de l'extrémité libre de l'aile et l'aire argentée de la surface externe étant située selon la direction longitudinale entre la bande et l'âme du cavalier.

Il est de préférence prévu deux bandes internes argentées, l'une près de l'extrémité libre de l'aile et l'autre près de l'âme du cavalier de contact en cuivre, l'aire argentée de la surface externe étant située selon la direction longitudinale entre les deux bandes et ayant une épaisseur sensiblement inférieure à celle des bandes internes.

La soudure du cavalier au profilé s'effectue aisément par passage d'une molette sur la surface externe le long d'une bande située au droit de la bande interne argentée ou par points au droit de cette bande.

La description est faite ci-après d'un mode de réalisation non limitatif de l'invention, en regard des dessins annexés.

La figure 1 représente en perspective l'une des extrémités d'une barre seion l'invention.

La figure 2 est une vue en perspective similaire du cavalier avant insertion sur l'extrémité du profilé.

La figure 3 est une vue de côté de l'extrémité de la barre.

Les figures 4 et 5 sont des vues en perspective de variantes d'exécution de l'invention.

La barre représentée sur les figures est destinée à être disposée dans une canalisation préfabriquée de distribution électrique de puissance. La barre comprend un profilé en aluminium 10 qui s'étend selon une direction longitudinale X-X', ce profilé étant plat, c'est-à-dire ayant une largeur l beaucoup plus grande que sa hauteur h. A ses extrémités et de place en place sur la longueur du profilé, des cavaliers en cuivre 20 sont rapportés sur celui-ci pour assurer un contact électrique satisfaisant avec des pièces de connexion 11 propres à des organes de dérivation ou d'éclissage.

Chaque cavalier 20 est une pièce en forme de U présentant une âme 21 et deux ailes 22,23, l'âme 21 venant coiffer un bord extrême ou latéral du profilé 10 et les ailes étant au contact des surfaces plates du profilé. Les surfaces internes 22a,23a et externes 22b,23b des ailes 22,23 du cavalier 20 sont revêtues d'argent selon des aires respectives internes A et externes B.

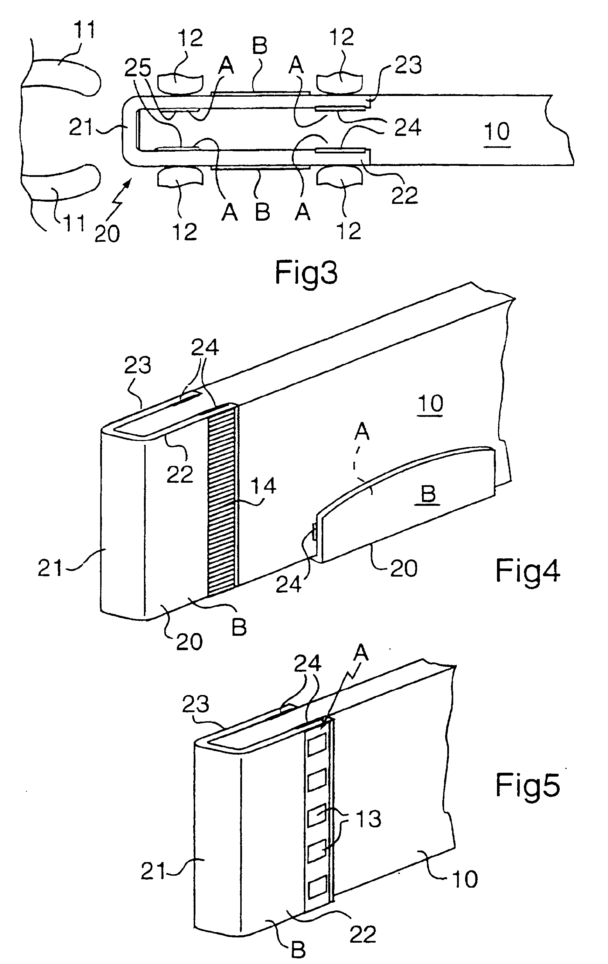

Ce préférence et en prenant l'exemple de l'aile 22, l'aire argentée A de sa face interne 22a se compose de deux bandes 24,25 qui s'étendent sur la largeur de aile et transversalement à la direction X-X', l'une 24 des bandes étant située près de l'extrémité libre de l'aile et l'autre 25 étant située vers l'âme 21 du U ; l'aire externe argentée B est située selon la longueur du profité entre les deux bandes 24,25 (voir figure 3). S'il n'existe qu'une bande 24 sur chaque aile, cette bande est située près de l'extrémité libre de l'aile et l'aire externe B est située selon la longueur du profilé entre la bande 24 et l'àme 21 qui forme le pli du U (voir figure 4). L'argent présent sur l'aire externe B sert à améliorer la prise de contact avec les organes de dérivation ou d'éclissage, tandis que l'argent présent sur l'aire interne A sert à apporter le métal de soudure de l'aile du cavalier au profilé. L'épaisseur de l'argenture de l'aire interne A peut être typiquement de l'ordre de 10µm et celle de l'aire externe B est sensiblement inférieure par exemple de l'ordre de 3µm.

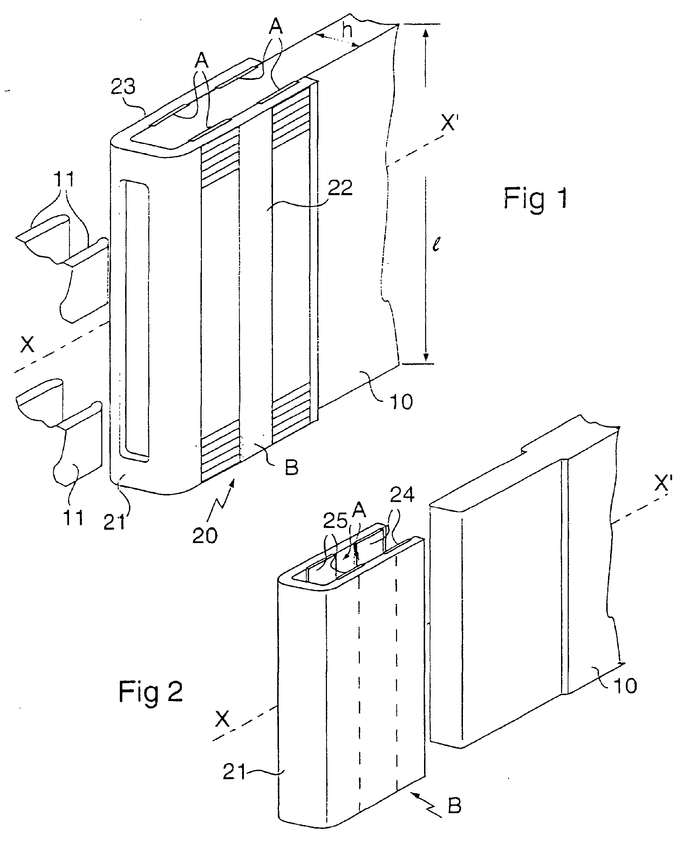

Le scudage du cavalier au profilé peut s'effectuer par passage de molettes 12 transversalement à !a barre le long d'une bande 14 parallèle à la bande 24 ou aux deux bandes 24.25 de chaque aile (figures 1 à 3 ou 4) ou bien par soudure par peints 13 répartis sur la longueur de la bande (voir figure 5). Le cavalier peut être en relief par rapport aux grandes faces du profilé 10 (figures 1 et 5) ou être dans leur prolongement (figures 2 à 4).

## Revendications

1. Barre pour canalisation de distribution électrique, cette barre comprenant d'une part un profilé plat en aluminium (10) qui s'étend selon une direction principale (X-X') et d'autre part, disposées à intervalles réguliers sur !a longueur du profilé et/cu à ses extrémités, des pièces de contact en cuivre (20) mises en contact électrique intime avec le profilé, les pièces de contact étant des cavaliers en forme de U dont l'âme et les ailes enveloppent le bord de la barre pour assurer le contact électrique avec des organes de dérivation ou d'éclissage, les surfaces externes (22b, 23b) des ailes des cavalius présentent des airs argentées (B), l'aire argentée (B) de la surface externe sert à la prise de contact de l'organe de dérivation ou d'éclissage
***caractérisée par le fait que** :*
- les surfaces internes (22a.23a) des ailes (22,23) des cavaliers (20) présentent des aires respectives argentées (A),
- l'aire argentée (A) de la surface interne d'une aile sert à l'apport du métal qui assure la soudure du cavalier (20) au profilé (10).

2. Barre pour canalisation de distribution électrique selon la revendication 1. ***caractérisée par le fait que*** l'aire argentée (A) de la surface interne de l'aile (22,23) s'étend selon une bande (24) sensiblement sur la largeur de l'aile (22,23).

3. Barre pour canalisation de distribution électrique selon la revendication 2, **carac*térisée par le fait que*** la bande interne argentée (24) est située près de l'extrémité libre de l'aile (22,23) et que l'aire argentée (B) de la surface externe est située selon !a direction longitudinale (X-X') entre la bande (24) et l'âme (21) du cavalier de contact en cuivre (20).

4. Barre pour canalisation de distribution électrique selon la revendication 2, ***caractérisée par** le fait qu*'il est prévu deux bandes internes argentées (24,25), !'une (24) près de l'extrémité libre de l'aile (22,23) et l'autre (25) près de l'âme (21) du cavalier de contact en cuivre (20), l'aire argentée (B) de la surface externe (22b,23b) étant située selon la direction longitudinale (X-X') entre les deux bandes.

5. Barre pour canalisation de distribution électrique selon la revendication 2, ***caractérisée par**le fait que* la soudure du cavalier (20) au profilé (10) est effectuée par passage d'une molette sur la surface exteme (22b,23b) le long d'une bande (14) située au droit de la bande interne argentée (24,25).

6. Barre pour canalisation de distribution électrique selon la revendication 2, ***caractérisée par le fait que*** la soudure du cavalier (20) au profilé (10) est effectuée par points (13) au droit de :a bande argentée (24.25).

7. Barre pour canalisation de distribution électrique selon la revendication 1, ***caractérisée par le fait que*** l'épaisseur de l'aire argentée (A) de la surface interne de l'aile (22,23) est sensiblement supérieure à celle de l'aire argentée (B) de sa surface externe.

## Patentansprüche

1. Schiene für eine Elektrizitätsversorgungsleitung, wobei diese Schiene einerseits ein flaches Profilteil (10) aus Aluminium, das sich in einer Hauptrichtung (X-X') erstreckt, und andererseits, in regelmäßigen Abständen über die Länge des Profilteils verteilt und/oder an seinen Enden angeordnet, Kontaktstücke (20) aus Kupfer aufweist, die mit dem Profilteil in engen elektrischen Kontakt gebracht werden, wobei die Kontaktstücke U-förmige Reiter sind, deren Steg und Schenkel den Rand der Schiene umhüllen, um den elektrischen Kontakt mit Ableitungs- oder Verbindungsorganen zu gewährleisten, wobei die Außenflächen (22b, 23b) der Schenkel der Reiter versilberte Bereiche (B) aufweisen, wobei der versilberte Bereich (B) der Außenfläche zur Kontaktaufnahme des Ableitungs- oder Verbindungsorgans dient,
**dadurch gekennzeichnet, dass**:
- die Innenflächen (22a, 23a) der Schenkel (22, 23) der Reiter (20) versilberte Bereiche (A) aufweisen,
- der versilberte Bereich (A) der Innenfläche eines Schenkels zur Zufuhr des Metalls dient, das das Schweißen des Reiters (20) an das Profilteil (10) gewährleistet.

2. Schiene für eine Elektrizitätsversorgungsleitung nach Anspruch 1, **dadurch gekennzeichnet, dass** der versilberte Bereich (A) der Innenfläche des Schenkels (22, 23) sich gemäß einem Streifen (24) im Wesentlichen über die Breite des Schenkels (22, 23) erstreckt.

3. Schiene für eine Elektrizitätsversorgungsleitung nach Anspruch 2, **dadurch gekennzeichnet, dass** der innere versilberte Streifen (24) sich nahe dem freien Ende des Schenkels (22, 23) befindet, und dass der versilberte Bereich (B) der Außenfläche sich in Längsrichtung (X-X') zwischen dem Streifen (24) und dem Steg (21) des Kontaktreiters (20) aus Kupfer befindet.

4. Schiene für eine Elektrizitätsversorgungsleitung nach Anspruch 2, **dadurch gekennzeichnet, dass** zwei versilberte innere Streifen (24, 25) vorgesehen sind, einer (24) nahe dem freien Ende des Schenkels (22, 23), und der andere (25) nahe dem Steg (21) des Kontaktreiters (20) aus Kupfer, wobei der versilberte Bereich (B) der Außenfläche (22b, 23b) sich in Längsrichtung (X-X') zwischen den beiden Streifen befindet.

5. Schiene für eine Elektrizitätsversorgungsleitung nach Anspruch 2, **dadurch gekennzeichnet, dass** das Schweißen des Reiters (20) an das Profilteil (10) durch Führen eines Rändelrädchens über die Außenfläche (22b, 23b) gemäß einem Streifen (14) erfolgt, der sich vor dem versilberten inneren Streifen befindet (24, 25).

6. Schiene für eine Elektrizitätsversorgungsleitung nach Anspruch 2, **dadurch gekennzeichnet, dass** das Schweißen des Reiters (20) an das Profilteil (10) punktweise (13) vor dem versilberten Streifen (24, 25) erfolgt.

7. Schiene für eine Elektrizitätsversorgungsleitung nach Anspruch 1, **dadurch gekennzeichnet, dass** die Dicke des versilberten Bereichs (A) der Innenfläche des Schenkels (22, 23) wesentlich größer ist als diejenige des versilberten Bereichs (B) seiner Außenfläche.

## Claims

1. Bar for an electricity distribution duct, this bar comprising firstly a flat aluminum section (10) that extends along a main direction (X-X'), and secondly copper contact parts (20) put in intimate electrical contact with the section at regular intervals along the section and/or at its ends, the contact parts being U-shaped jumpers, in which the web and the flanges surround the edge of the bar to make electrical contact with junction devices or fish plates, the external surfaces (22b,23b) of the flanges of the jumpers have silver plated areas(B), the silver plated area (B) of the external surface makes contact with the junction device or the fish plates
***characterized by** the fact that:*
- the internal surfaces (22a, 23a) of the flanges (22, 23) of the jumpers (20) have silver plated areas (A, H) respectively,
- the silver plated area (A) of the internal surface of a flange is used to add metal that welds the jumper (20) to the section (10) and the silver plated area (B) of the external surface makes contact with the junction device or the fish plates.

2. Bar for an electricity distribution duct according to claim 1, ***characterized by** the fact that* the silver plated area (A) of the internal surface of the flange (22, 23) extends along a strip (24) approximately equal to the width of the flange (22, 23).

3. Bar for an electricity distribution duct according to claim 2, ***characterized by** the fact that* the silver plated internal strip (24) is located close to the free end of the flange (22, 23) and that the silver plated area (B) of the external surface is located along the longitudinal direction (X-X') between the strip (24) and the web (21) of the copper contact jumper (20).

4. Bar for an electricity distribution duct according to claim 2, ***characterized by** the fact* that it includes two internal silver plated strips (24, 25), one (24) close to the free end of the flange (22, 23) and the other (25) close to the web (21) of the copper contact jumper (20), the silver plated area (B) of the external surface (22b, 23b) being located along the longitudinal direction (X-X') between the two strips.

5. Bar for an electricity distribution duct according to claim 2, ***characterized by** the fact that* the weld between the jumper (20) and the section (10) is made by passing a roller over the external surface (22b, 23b) along a strip (14) in line with the silver plated internal strip (24, 25).

6. Bar for an electricity distribution duct according to claim 2, ***characterized by** the fact* that the weld between the jumper (20) and the section (10) is made at spot welds (13) in line with the silver plated strip (24, 25).

7. Bar for an electricity distribution duct according to claim 1, ***characterized by** the fact that* the thickness of this silver plated area (A) of the internal surface of the flange (22, 23) is significantly greater than the silver plated area (B) of its external surface.
